# EUROPÄISCHE PATENTSCHRIFT

(11) **EP 2 841 516 B1**
(45) Veröffentlichungstag und Bekanntmachung des Hinweises auf die Patenterteilung: **14.11.2018**
(21) Anmeldenummer: 13720270.1
(22) Anmeldetag: 10.04.2013
(51) Int. Cl.: D21H 17/37, D21H 17/34, D21H 17/35, C09J 7/21, C09J 7/20

(54) **ABDECKKLEBEBAND**
ADHESIVE MASKING TAPE
BANDE ADHÉSIVE DE RECOUVREMENT

(30) Priorität: 23.04.2012 DE 102012206648
(43) Veröffentlichungstag der Anmeldung: 04.03.2015
(73) Patentinhaber: tesa SE, 22848 Norderstedt (DE); Latz, Henning, 21337 Lüneburg (DE); Thieltges, Kai, 76133 Karlsruhe (DE)
(72) Erfinder: LATZ, Henning, 21337 Lüneburg (DE); THIELTGES, Kai, 76133 Karlsruhe (DE)
(86) Internationale Anmeldenummer: PCT/EP2013/057435
(87) Internationale Veröffentlichungsnummer: WO 2013/160102

(56) Entgegenhaltungen:
- EP-A1- 1 078 968
- EP-A2- 1 253 177
- DATABASE WPI Week 200270 Thomson Scientific, London, GB; AN 2002-648705 XP002703233, & JP 2002 212520 A (SEKISUI HOUSE KK) 31. Juli 2002 (2002-07-31)

## Beschreibung

Die Erfindung betrifft ein Klebeband, das als Abdeckklebeband eingesetzt werden kann.

Selbstklebende Abdeckbänder, im Folgenden als Abdeckklebeband bezeichnet, müssen einige wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine ausreichende Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, der Widerstand gegenüber Farbdurchschlag, eine dosierte Klebkraft auf relevanten Untergründen und der eigenen Rückseite sowie eine händische Einreißbarkeit

Deshalb werden für Abdeckklebebänder bevorzugt Papierträger und dann solche eingesetzt, die durch die Art des verwendeten Zellstoffes, durch den Mahlgrad und durch bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.
Diese Rohstoffe und Verfahrensschritte sind ausschließlich der Kunst des Papiermachers überlassen und stehen dem Hersteller von Abdeckklebebändern in der Regel nicht zur Verfügung, da dieser im Regelfall das Rohpapier als Basis der Abdeckklebebands zukauft.

Die Dehnbarkeit ist eine wichtige Eigenschaft von Abdeckklebebändern. Denn sie ermöglicht die vollflächige und faltenfreie Verklebung in Kurven und auf sphärischen Oberflächen, wie sie zum Beispiel bei der Reparaturlackierung von Pkws notwendig ist; ein dehnbares Abdeckklebeband kann bei der Handapplikation weichen Konturen perfekt nachgeführt werden und führt so zu einer sauberen Farbkante ohne Farbunterläufer. Die dafür erforderliche Dehnbarkeit in Längsrichtung liegt bei Abdeckbändern auf Basis sogenannter Feinkreppträger im Bereich von 8 bis 15 % (Reißdehnung), bei solchen auf Basis von stark gekreppten Papierträgern um 20 bis 80 %. Zugfestigkeit und Dehnung sind so aufeinander abgestimmt, dass es problemlos gelingt, während der manuellen Applikation das Klebeband in Kurvenform zu verkleben, wobei ein Teil der Dehnung herausgezogen wird ohne dass das der Papierträger an der äußeren Seite der Kurve einreißt.

Neben den oben erwähnten Maskierklebebändern mit gekreppten Trägern gibt es auch solche, die einen ungekreppten Träger aufweisen (Flatback). Zu diesen Klebebändern gehören auch solche die auf sogenanntem Japanpapier (auch Washi oder Wagami) basieren. Aufgrund der fehlenden Kreppung haben die Träger eine geringere Dehnbarkeit. Diese liegt abhängig von der Papierstruktur, Faser- und Imprägniermitteltyp üblicherweise bei 3 bis 8 %. In einem neueren Patent werden auch Beispiele mit Dehnungswerten von Trägerpapieren größer 10 % offenbart (EP 2 159 321 A1).

Der Begriff "Japanpapier" (beziehungsweise Washi oder Wagami) wird seit langem in der Literatur verwendet. Allerdings findet sich außer der Beschreibung der optischen und haptischen Eigenschaften keine exakte technische Definition dieses Papiertyps. Japanpapier ist ein traditionell handgeschöpftes, durchscheinendes Papier aus Japan. Heute werden Papiere mit dieser Optik bzw. Haptik auch industriell gefertigt. Japanpapier wird überwiegend aus Fasern von Pflanzen gewonnen. Die bekanntesten klassisch verwendeten darunter sind Fasern aus Gampi, Kouzo und Mitsumata. Diese ergeben ein sehr zähes, widerstandsfähiges Papier aufgrund der eher längeren Fasern. Dies ist auch auf die Herstellungsprozedur zurückzuführen, da die Rinde der Pflanzen nicht zerschnitten, sondern durch Schlagen und Klopfen zerkleinert wird. In der industriellen Fertigung werden heute auch aus Nadel- und anderen Hölzern gewonnene Zellstofffasern und diverse synthetische Fasern eingesetzt.

Klebebänder aus Japanpapier weisen gegenüber konventionellen gekreppten Abdeckbändern eine Reihe von Vorteilen auf. Zum einen werden durch die geringe Dicke der Papiere besonders flache Farbkanten nach dem Überstreichen erzielt. Hierbei spielt auch eine Rolle, dass eine weitere spezielle Papiereigenschaft diesen Typs, die im Vergleich zu gekreppten Papieren geringere Biegesteifigkeit, es ermöglicht, eine ausreichende Verklebungssicherheit mit geringeren Klebkräften zu realisieren. Dies erlaubt eine deutliche Reduktion des benötigten Klebmasseauftrags im Vergleich zu Kreppklebebändern. Damit einhergehend wird gleichsam das Risiko von Klebmasserückständen und Untergrundbeschädigung minimiert.
Ein weiterer Vorteil des flachen, ungekreppten Papierträgers ist, dass Farbunterläufer, wie sie bei gekreppten Papieren im Bereich der Kreppfalten entstehen können, vermieden werden. Im Ergebnis werden mit Abdecklebebändern auf Basis von Japanpapieren hochpräzise Farb- und Lackkanten realisiert.
Im Gegensatz zu den in der Regel nahezu blickdichten Kreppklebebändern sind Klebebänder auf Basis von Japanpapieren aufgrund der geringen Dicke und der homogenen Papierstruktur sehr oft mindestens semitransparent.
Damit ergibt sich in der Anwendung der Vorteil der präzisen Applikation (zum Beispiel bei der genauen Ausrichtung an Hilfslinien).

Bei dünnen Papier-Abdeckklebebändern liegt ein generelles Problem darin, eine ausreichende Dichtigkeit des Produkts sicherzustellen. Dies gilt für Klebebänder basierend auf gekreppten als auch auf ungekreppten Papieren.
Da einer der wesentliche Vorteile der Klebebänder auf Basis von Japanpapieren durch die geringe Dicke erzielt wird, fokussiert man sich bei der Gestaltung dieser Klebebänder auf einen möglichst flachen Aufbau (Papier + Klebmasse + evtl. Funktionsschichten). Eine ausreichende Dichtigkeit zu erzielen, ist daher bei diesen Klebebändern eine besondere Herausforderung.

Eine mangelnde Dichtigkeit eines Abdeckbandes wird für den Anwender beim Überstreichen mit Farbe oder Lack erkennbar, wenn nämlich partiell Farbe beziehungsweise Lack durch das Band auf den Untergrund durchschlagen. In so einem Fall verbleiben nach dem Abziehen des Bandes auf dem zu schützenden Untergrund höchst unerwünschte und in der Regel mühsam zu entfernende Reste getrockneter Farben.
Die Ursache dafür ist, dass die Trägerpapiere der Klebebänder sehr oft auch nach der Imprägnierung nicht vollständig gefüllte Hohlräume beziehungsweise Kapillaren aufweisen, welche auch durch die auf der Trägerunterseite aufgetragene Kleberschicht nicht abgedichtet werden.

Trotz der für den Fachmann bekannten Problematik gibt es im Markt einige Abdeckklebebänder, welche eine mangelnde Dichtigkeit aufweisen

Zur Vermeidung des beschriebenen Phänomens muss der Papierträger möglichst dicht gestaltet werden, indem entweder Papiere mit schwerer Grammatur und/oder besonders homogener Struktur und/oder höherer Menge an Imprägnierung verwendet werden. Ein weiteres Mittel zur Abdichtung des Trägers ist es, zusätzlich zur Imprägnierung eine Barriereschicht auf den Träger aufzutragen.

Die Wahl schwerer Träger ist aber aufgrund der dadurch bedingten höheren Produktkosten, der ebenfalls einhergehenden sinkenden Anschmiegsamkeit und im Besonderen aufgrund des aktuellen Trends im Bereich von Abdeckklebebändern - hin zu möglichst flachen, randscharfe Farbkanten liefernden Produkten für hochwertige Malerarbeiten - unerwünscht. Die Verwendung einer Barriereschicht ist ebenfalls unvorteilhaft, da diese ebenfalls die Kosten und die Biegesteifigkeit erhöht.
Die weitere Alternative, nämlich einen wenig dichten Träger mit der aufzutragenden Klebmasseschicht vollständig abzudichten, ist bei Verwendung der für Abdeckklebebänder typischen Klebmasseauftragsmengen zwischen 20 und 50 g/m² und klassischer Beschichtung aus in Lösemittel oder Wasser gelöster/dispergierter Klebmassen kaum möglich. Ähnlich wie bei der Imprägnierung, entstehen hier durch Trocknung Kapillare oder kleine Hohlräume, welche die Dichtigkeit gegenüber aufgetragener Farbe herabsetzen.

Bislang ging die Fachwelt davon aus, dass die Beständigkeit gegenüber Farbdurchschlag wesentlich auf den physikalischen Eigenschaften des verwendeten Trägermaterials (incl. Berücksichtigung einer Imprägnierung und Lackierung mit einem Releaselack und gegebenenfalls einer weiteren Barriereschicht (Topcoat)) basierte.

Aufgabe der vorliegenden Erfindung ist es, ein reversibles Klebeband zu schaffen, das einen besonders flachen Träger aus Papier von eher offener Struktur, das heißt einer höheren Luftdurchlässigkeit, aufweist, und damit in der Anwendung besonders präzise und flache Farbkanten generiert. Gleichzeit soll ein Durchschlagen von aufgetragener Farbe oder Lack sicher verhindert werden, ohne dass zusätzliche Barrierebeschichtungen verwendet werden müssen.

Gelöst wird diese Aufgabe durch ein Klebeband, wie es im Hauptanspruch dargelegt ist. Gegenstand der Unteransprüche sind vorteilhafte Fortbildungen des Erfindungsgegenstandes. Des Weiteren betrifft die Erfindung Verwendungsvorschläge des erfindungsgemäßen Klebebandes.

Demgemäß betrifft die Erfindung ein Klebeband, das in dem anwendungstechnischen Test ("Test A") mindestens eine Note von 3 erzielt, mit einem nicht gekreppten, imprägnierten Papierträger, auf dem einseitig eine Klebemasse mit einem Masseauftrag von 20 bis 50 g/m² aufgebracht ist, wobei der nicht gekreppte, imprägnierte Papierträger (vor dem Auftrag der Klebemasse) gleichzeitig folgende Eigenschaften aufweist:
- Imprägniermitteleintrag zwischen 5 und 25 g/m²
- Dicke zwischen 50 µm und 90 µm
- Reißdehnung zwischen 3 und 8 %
- Biegesteifigkeit in Maschinenrichtung (abgekürzt MD) zwischen 0,015 mNm und 0,035 mNm
- Biegesteifigkeit in Querrichtung (abgekürzt CD) zwischen 0,005 mNm und 0,025 mNm
- Luftdurchlässigkeit zwischen 0,06 und 1,5 cm³/(cm^{2*}min)

Trägerpapiere für Abdeckklebebänder mit den vorgenannten Eigenschaften sind üblicherweise Washi-Papiere, so dass als Papierträger erfindungsgemäß vorteilhafterweise Washi-Papier eingesetzt wird.

Viele kommerziell erhältliche Washi-Papiere sind dünn und anschmiegsam, haben aber den Nachteil, dass in ihnen auch nach dem Imprägnierprozess und dem damit verbundenen Eintrag von üblicherweise bis zu 25 g/m² Imprägniermittel Poren vorhanden sind, deren Durchmesser zwischen 0,1 und 1,5 mm betragen.

Derartige Papierträger waren bisher in Abdeckklebebändern nicht ohne einen Auftrag einer oder mehrerer zusätzlicher Barriereschichten (zum Beispiel einem so genannten Topcoat) verwendbar beziehungsweise nur dann verwendbar, wenn akzeptiert wird, dass in der Anwendung durch das Durchschlagen von Farben beziehungsweise Lack partiell Farb- oder Lackresten auf dem abgedeckten Untergrund zurückbleiben.

In einer vorteilhaften Ausgestaltung der Erfindung liegt das Flächengewicht des Papiers (ohne Berücksichtigung einer eventuellen Imprägnierung oder Lackierung mit einem Release) bei 20 bis 40 g/m², bevorzugt bei 25 bis 35 g/m².

Gemäß vorteilhafter Ausführungsformen der Erfindung weist der imprägnierte Papierträger folgende Eigenschaften auf:
(a) Imprägniermitteleintrag zwischen 9 und 20 g/m²
(b) Dicke zwischen 60 µm und 80 µm
(c) Reißdehnung zwischen 4 und 7 %
(d) Biegesteifigkeit in Maschinenrichtung zwischen 0,02 mNm und 0,03 mNm
(e) Biegesteifigkeit in Querrichtung zwischen 0,01 mNm und 0,02 mNm und/oder
(f) Luftdurchlässigkeit zwischen 0,06 und unter 1,3 cm³/(cm^{2*}min)

Es sei an dieser Stelle betont, dass zu den bevorzugten Ausführungsformen der Erfindung auch Varianten gehören, in denen eine Kombination von nur zwei der bevorzugten Merkmale verwirklicht ist, während die übrigen drei Merkmale gegenüber dem Hautpanspruch unverändert sind, also beispielsweise ein Papierträger, in dem nur die Merkmale (a) und (b) geändert vorliegen, ein Papierträger, in dem nur die Merkmale (a) und (c) geändert vorliegen, usw.
Selbstverständlich umfasst die Erfindung auch die Varianten, in denen gleichzeitig drei der bevorzugten Merkmale vorliegen, also beispielsweise ein Papierträger, in dem die Merkmale (a), (b) und (c) geändert vorliegen, ein Papierträger, in dem die Merkmale (a), (b) und (d) geändert vorliegen, usw.

Weiter selbstverständlich umfasst die Erfindung auch die Varianten, in denen gleichzeitig vier der bevorzugten Merkmale vorliegen, also beispielsweise ein Papierträger, in dem die Merkmale (a), (b), (c) und (d) geändert vorliegen, ein Papierträger, in dem die Merkmale (a), (b), (c) und (e) geändert vorliegen, usw.
Des Weiteren ist Teil der Erfindung ein Papierträger der gleichzeitig alle Merkmale (a) bis (e) aufweist.

Für den Fachmann zeigen die aufgeführten Merkmale des Papierträgers, dass in dem Papierträger Poren vorhanden sein müssen, die eigentlich die Verwendung als Träger in einem Abdeckklebeband ausschließen.

Auch für den Fachmann ist erfindungsgemäß überraschenderweise festgestellt worden, dass die in dem Papierträger vorhandenen Poren schon durch den geringen Auftrag von maximal 50 g/m² einer Klebemasse, vorzugsweise Haftklebemasse zugesetzt werden.

Vorzugsweise ist die Klebemasse eine Haftklebemasse auf Basis von Naturkautschuk. Die besten Ergebnisse lassen sich erzielen, wenn die Haftklebemasse lösemittelfrei aufgebracht wird. Dann wird ein Durchschlagen von Farbe bereits weitestgehend vermieden.
Aus diesem Grund erfolgt gemäß einer besonders vorteilhaften Ausführungsform der Erfindung der Auftrag der Klebemasse lösungsmittelfrei.

Zur Erhöhung der Festigkeit und für eine Mindestabdichtung, speziell unter feuchten Bedingungen, werden die Papiere vor der weiteren Verarbeitung zum Klebeband mit einer Imprägnierung ausgerüstet. Dafür können handelsübliche Imprägniermittel eingesetzt werden wie zum Beispiel wässrige Dispersionen eines carboxylgruppenhaltigen Acrylsäureestercopolymerisats oder eines Styrol-Butadien-Copolymerisates, wobei das Stryol-Butadien-Copolymerisat auch Carboxylgruppen enthalten kann. Weiterhin eignen sich auch Imprägniermittel auf Basis von AcrylnitrilButadien Copolymeren beziehungsweise Styrol-Acrylsäureester-Copolymerisate. Das Flächengewicht des Imprägniermitteleintrags (trocken) kann zwischen 5 g/m² und 25 g/m² betragen, vorteilhaft aber zwischen 9 g/m² und 20 g/m².

Gemäß einer weiteren vorteilhaften Ausführungsform der Erfindung wird ein Trennmittel direkt auf der Rückseite des Papierträgers, also auf der der Klebemasse gegenüberliegenden Seite, aufgebracht, um somit antiadhäsive Eigenschaften hervorzurufen. Das Abrollen des üblicherweise zu einer archimedischen Spirale aufgewickelten Klebebands wird erleichtert, und es verbleibt die Klebemasse auf der Unterseite des Klebebands, also auf der Seite, auf der die Klebemasse ursprünglich verankert war. Ein unerwünschter Übergang der Klebemasse auf die Rückseite beim Abrollen - dem Fachmann als Umspulen der Klebemasse bekannt - unterbleibt.

Man unterscheidet drei Haupttypen von Trennmitteln, auch Releasebeschichtungen genannt:
Zunächst gibt es Trennmittel auf Basis langkettiger Alkylgruppen. Beispiele sind Polyvinylstearylcarbamte, Polyethyleniminstearylcarbamide, Chrom-Komplexe von C₁₄-bis C₂₈-Fettsäuren und Stearyl-Copolymere (beispielsweise beschrieben in der DE 28 45 541 A).
Daneben existieren Acrylpolymere mit perfluorierten Alkylgruppen (US 3,318,852 A), die als Latex oder aus Lösungsmittel aufgebracht werden.
Je nach Anwendungsfall wird das passende Trennmittel gewählt.

Die Erfindung umfasst vorzugsweise eine Haftklebemasse, die lösungsmittelfrei verarbeitet wird. Diese Klebemassen sind auch als Hotmelt-Haftklebemassen oder auch als HMPSA bekannt.
Im Folgenden wird unter einer Haftklebemasse dabei eine viskoelastische Masse verstanden, die bei Raumtemperatur in trockenem Zustand permanent klebrig und klebfähig bleibt. Die Klebung erfolgt dabei durch leichten Anpressdruck sofort auf fast allen Substraten.

Derartige Klebemassen können im diskontinuierlichen Betrieb in Knetern und im kontinuierlichen Betrieb in einem Aggregat nach dem Prinzip des Farrel Continuous Mixer oder in Extrudern wie beispielsweise Ein-, Doppelschneckenextruder oder Planetwalzenextruder hergestellt werden.
Der Banbury-Mischer ist zum Gattungsbegriff für eine ganz bestimmte Art eines Innenmischers geworden. Der Mischer weist eine geschlossene Kammer auf, in der zwei mit Knetelementen bestückte Rotoren laufen.
Wie beim Banbury-Mischer kennzeichnet auch die Bezeichnung "Farrel Continuous Mixer" (kurz FCM) einen ganz bestimmten Typ eines Mischers, der intensiv mischen kann.
Die Tatsache, dass beide Mischer eine ganze Gattung von Mischern bezeichnen, lässt sich unter anderem auch aus dem Fachbuch "Thermoplastic and Rubber Compounds" der Autoren White und Kim entnehmen.
Beiden Mischertypen sind eigene Kapitel (Banbury: Seiten 234 bis 245; "Farrel Continuous Mixer": Seiten 261 bis 263) gewidmet, wobei bezüglich des "Farrel Continuous Mixer" zusätzlich auf ältere Patente verwiesen wird, in denen der Mischertyp beschrieben wird (siehe Seite 272, Zitate [199 bis 202]).
Als Compoundieraggregate sind im Sinne dieser Erfindung solche geeignet, die distributive Mischelemente enthalten. Die distributiven Elemente homogenisieren geschmolzene Bestandteile wie Harze oder Polymere im Gemisch der Haftklebemassenformulierung. Im lösungsmittelfreien diskontinuierlichen Betrieb bieten sich insbesondere Banbury-Mischer, Buss-Kneter oder der Baker-Perkins-Ko-Kneter an. Im kontinuierlichen Betrieb können Doppelschneckenextruder in co-rotierender Fahrweise bevorzugt eingesetzt werden.

Als Beschichtungsverfahren können im Sinne dieser Erfindung Rakelverfahren, Düsenrakelverfahren, Rollstabdüsenverfahren, Extrusionsdüsenverfahren, Gießdüsen- und Gießverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Zur Speisung des erfindungsgemäßen Beschichtungsaggregats kann zwischen Dosier- und Mischanlage und Beschichtungsaggregat optional ein Förder- und/oder Mischaggregat, zum Beispiel ein Einschnecken- oder Doppelschneckenextruder, zwischengeschaltet sein. Der wahlweise einsetzbare Extruder ist separat beheizbar.

Besonders bevorzugte Verfahren zur Herstellung erfindungsgemäßer Naturkautschukmassen sind die aus der DE 198 96 609 A1 bekannte Verwendung von Planetwalzenextrudern sowie die aus der WO 94/11175 A1, WO 95/25774 A1 und WO 97/07963 A1 bekannte Verwendung von Doppelschneckenextrudern.

Mit den dort beschriebenen Verfahren sind fast ausnahmslos alle vorbekannten und in der Literatur beschriebenen Komponenten von naturkautschukbasierenden Selbstklebemassen lösemittelfrei verarbeitbar.

Unter einer naturkautschukbasierenden Selbstklebemasse wird eine Selbstklebemasse verstanden, die bei Berücksichtigung sämtlicher sonstiger Zusätze zu mindestens 25 Gew.-% aus Naturkautschuk besteht.

Dem in der erfindungsgemäßen Haftklebemasse vorhandenen Naturkautschuk können Synthesekautschuke zugesetzt werden, und zwar bevorzugt zu einem Anteil von bis zu 25 Gew.-%, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können dem Naturkautschuk zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Die Gewichtsmenge der Harze beträgt vorzugsweise 5 bis 50 Gewichtsteile, besonders bevorzugt 5 bis 30 Gewichtsteile bezogen auf 100 Gewichtsteile Naturkautschuk (fest/fest).

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, insbesondere thermisch reaktive, blockierungsmittelfreie Isocyanate, wobei die Funktionalität der thermisch reaktiven, blockierungsmittelfreien Isocyanate im Mittel größer als 1 ist, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar. Bevorzugt ist ein thermisch reaktives Vernetzungssystem, das mindestens ein Vernetzungshilfsmittel aus der Familie der Phenolharze oder Alkylphenolharze oder ihrer halogenierten Derivate sowie optional ein saures Kolophoniumharz oder ein saures Kolophoniumharzderivat und mindestens ein zweiwertiges Metalloxid enthält, besonders bevorzugt ein thermisch reaktives Vernetzungssystem, das thermisch reaktive Vernetzungshilfsmittel aus der Familie der Phenolharze oder Alkylphenolharze oder ihrer halogenierten Derivate enthält, die in aliphatischen und aromatischen Kohlenwasserstoffen schwer oder nicht löslich sind.

Der Naturkautschuk basierenden Haftklebemasse können zur Einstellung von optischen und klebtechnischen Eigenschaften Farbstoffe, Lichtschutzmittel, Antioxidantien (primäre und sekundäre) und/oder Füllstoffe enthalten. Zur Verbesserung der Verarbeitungseigenschaften können nach Bedarf Rheologieadditive (Verdicker), Entschäumer, Entlüfter, Netzmittel oder Verlaufsmittel nützlich sein.
Füllstoffe können verstärkend oder nicht verstärkend sein. Vor allem zu nennen sind hier Siliziumdioxide (sphärisch, nadelförmig oder unregelmäßig wie die pyrogenen Silicas), Glas als Voll- oder Hohlkugeln, Kalziumcarbonate, Zinkoxide, Titandioxide, Aluminiumoxide oder Aluminiumoxidhydroxide. Vorteilhaft werden die Füllstoffe in Wasser vordispergiert oder als kolloidale Lösung mit dem Basispolymer gemischt. Die Partikelgröße kann zwischen 1 Nanometer und 100 Mikrometer, bevorzugt zwischen 5 Nanometer und 20 Mikrometer, besonders bevorzugt zwischen 5 Nanometer und 10 Mikrometer liegen.
Im Prinzip geeignet sind auch expandierbare Kugeln (so genannte Mikroballons) als Füllstoff geeignet. Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 µm Durchmesser im unexpandierten Zustand) und ihre zur Expansion benötigten Starttemperatur (75 bis 220 °C) differenzieren. Wenn der Mikroballontyp beziehungsweise die Schäumungstemperatur auf das zur Massecompoundierung benötigte Temperaturprofil und die Maschinenparameter abgestimmt sind, können Massecompoundierung und Schäumung auch gleichzeitig in einem Schritt erfolgen.
Weiterhin sind unexpandierte Mikroballontypen auch als wässrige Dispersion mit einem Feststoff- beziehungsweise Mikroballonanteil von 40 bis 45 Gew.-% erhältlich und sind zur Schäumung von erfindungsgemäßen Klebemassen geeignet

Die Konzentration der die optischen und klebtechnischen Eigenschaften beeinflussenden Additive liegt bevorzugt zwischen 0,1 und 30 Gew.-Teilen, besonders bevorzugt 0,5 bis 20 Gew.-Teilen, ganz besonders bevorzugt 1 bis 10 Gew.-Teilen, jeweils bezogen auf den Naturkautschuk. Die Konzentration der die Verarbeitbarkeit modifizierenden Additive liegt bevorzugt zwischen 0,01 und 10 Gew.-Teilen, besonders bevorzugt 0,01 bis 5 Gew.-Teilen, ganz besonders bevorzugt 0,01 bis 3 Gew.-Teilen, jeweils bezogen auf das Naturkautschuk.

Der Masseauftrag (Beschichtungsstärke) der Klebemasse liegt zwischen 20 und 50 g/m², vorzugsweise zwischen 25 und 40 g/m², weiter vorzugsweise zwischen 30 und 35 g/m².

Das erfindungsgemäße Klebeband wird dadurch gebildet, dass auf den Träger partiell oder vollflächig einseitig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin können die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Die Träger können vor dem Zusammenbringen mit der Klebemasse (auf der Streich-, auch Beschichtungsseite genannt) chemisch wie durch Primerung oder durch eine physikalische Vorbehandlung wie Corona vorbereitet werden. Die Rückseite derselben kann einer antiadhäsiven physikalischen Behandlung oder Beschichtung unterzogen sein.

Weiter können diese Materialien vor- beziehungsweise nachbehandelt werden. Gängige Vorbehandlungen sind Corona und Hydrophobieren, geläufige Nachbehandlungen sind Kalandern, Tempern, Kaschieren, Stanzen und Eindecken.

Gemäß einer vorteilhaften Ausführungsform der Erfindung besteht das Klebeband aus den folgenden Schichten:
- einem imprägnierten Papierträger
- einer auf der Unterseite des Papierträgers lösemittelfrei aufgebrachten Haftklebemasse auf Basis von Naturkautschuk mit einem Masseauftrag von 20 bis 50 g/m², vorzugsweise zwischen 20 und 40 g/m²,
- einer Trennmittel-/Releaseschicht auf der Oberseite des Papierträgers
- einer Haftvermittler-/Primerschicht auf der Unterseite des Papierträgers

Neben die oben genannten Funktionsschichten kommt keine zusätzliche Funktionsbeziehungsweise Barriereschicht in dem Klebeband zur Anwendung.

Das erfindungsgemäße Klebeband kann mit einem Liner abgedeckt sein. Der Liner für das Produkt oder der Prozessliner ist zum Beispiel ein Trennpapier oder eine Trennfolie, vorzugsweise mit Silikonbeschichtung. Als Träger kommen zum Beispiel Folien aus Polyester oder Polypropylen oder kalandrierte Papiere mit oder ohne Dispersions- oder Polyolefinbeschichtung in Frage.

Ein Liner (Trennpapier, Trennfolie) ist nicht Bestandteil eines Klebebandes, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Bevorzugt wird das mit einem Papierträger ausgerüstete Klebeband als Abdeckband, beispielsweise in Lackierprozessen eingesetzt. Besonders vorteilhaft kann das erfindungsgemäße Band von Profi- oder Hobbymalern im Innen- bzw. bei entsprechend witterungs- und UV-beständig formulierter Klebmasse im Außenbereich eingesetzt werden, zum Beispiel beim Fassadenanstrich, bei Tür- oder Fensterarbeiten sowie anderen hochwertigen Malerarbeiten.
Aus diesem Grund wird das Klebeband vorteilhaft zur vorübergehenden Maskierung eines Untergrundes während eines Lackiervorgangs eingesetzt.
Das erfindungsgemäße Klebeband kann selbstverständlich auch bei der gewerblichen Lackierung von Fahrzeugen d.h. in Reparaturbetrieben als auch beim Hersteller von Fahrzeugen eingesetzt werden.

Das erfindungsgemäße Klebeband mit Papierträger ist sehr anschmiegsam, leicht und dennoch weitgehend frei von Farbdurchschlag.

Der allgemeine Ausdruck "Klebeband" umfasst im Sinne dieser Erfindung alle flächigen Gebilde wie in zwei Dimensionen ausgedehnte Stücke des Bandes, Bänder mit ausgedehnter Länge und begrenzter Breite, abgelängte Bandabschnitte, Stanzlinge und dergleichen.

Bevor die Erfindung mittels Beispielen plastisch dargestellt wird, werden die verwendeten Messmethoden beschrieben.

### Prüfmethoden

### Reißdehnung

Die Reißdehnung wird nach der Prüfmethode AFERA 5004 bestimmt.

### Luftdurchlässigkeit

Die Luftdurchlässigkeit wird nach EN ISO 9237 bestimmt. Die Messfläche beträgt 20cm² und es herrscht ein Prüfdruck von 200 Pa. Die Konditionierung der Prüfmuster erfolgt nach DIN 53802 bzw. ASTM D 1776. Für die eigentliche Prüfung wurde das Luftdurchlässigkeitsprüfgerät III der Fa. Textest Instruments verwendet.

### Klebkraft

Die Bestimmung der Klebkraft (gemäß AFERA 5001) wurde wie folgt durchgeführt. Als definierter Haftgrund wurden eine Stahlfläche und Untergründe mit mikroskopisch rauer Oberfläche (wie unten beschrieben 'Herstellung mikroskopisch rauer Oberflächen und Abzugskraft') eingesetzt. Für die Ermittlung der Klebkraft auf Stahl wurde das zu untersuchende verklebbare Flächenelement auf eine Breite von 20 mm und eine Länge von 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das verklebbare Flächenelement in einem Winkel von 180 ° vom Haftgrund mit einem Zugprüfungsgerät (Firma Zwick) bei einer Abzugsgeschwindigkeit von v=300mm/min abgezogen, und die hierfür bei Normalklima (23 ± 1 °C, 50 ± 5 % rel. Feuchte) benötigte Kraft gemessen. Der Messwert (in N/cm) ergab sich als Mittelwert aus drei Einzelmessungen.
Die Messung der Abzugskraft nach Anwendung wird weiter unten im Abschnitt 'Herstellung mikroskopisch rauer Oberflächen und Abzugskraft' beschrieben.

### Rolling Ball Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:
- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1 °C, 50 ± 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

### Biegesteifigkeit

Im "Bending Testers Code 160" der Firma "Lorenzen &Wettre" wird der Biegewiderstand nach DIN 53121 bestimmt. Die Probe wird zwischen die Klemmbacken gespannt und bei einem definierten Abstand von 5 mm gegen einen Kraftaufnehmer gebogen. Während der Messung wird bei einem Biegewinkel von 30° die Kraft gemessen. Die Biegegeschwindigkeit beträgt 5°/s.

### Anwendungstechnischer Test - Benotung der Farbdurchschläge (Test A)

### Geräte und Prüfklima

Prüfklima : Raumtemperatur (25 °C)
Geräte : Flachpinsel in 50 mm Breite
Haftgrund: Rohaluminiumbleche (Rohbleche unbehandelt / Dicke 0,270mm).
Lack Sikkens Rubbol AZ ([Alkydharzlack]), hergestellt im Jahr 2009

### Prüfmustervorbereitung

Von jeder zu prüfenden Rolle werden 3 beziehungsweise 4 Streifen in 50 mm Breite und 30 cm Länge verwendet. Die Rollen sollen vor der Verklebung mindestens 16 h bei 23 °C und 50 % r.F. im Klimaraum klimatisiert werden

### Versuchsdurchführung

Für jeden Lack wird eine separate Aluminiumtafel verwendet. Die Alutafeln werden mit Benzin 60.95 (CAS Nr. 64742-40-0) gereinigt. Dazu wurden die Tafeln dreimal, jeweils mit frischen benzingetränkten (Benzintype siehe oben) Zellstofftüchern abgewischt. Nach 10 Minuten Abdunstzeit werden 3 Prüfstreifen je Muster aufgeklebt. Die Prüfstreifen werden mit einem Kunststoffrakel zuerst einmal vorsichtig und dann ein zweites Mal kräftig angerakelt. Innerhalb einer halben Stunde werden die Prüfstreifen mit dem entsprechenden Lack vollflächig und gleichmäßig deckend überstrichen. Nach 1 Tag werden die Muster zügig (v = 8 m/min) von Hand in einem Winkel von 180° abgezogen und bewertet.
Bei der Bestimmung der Farbdurchschläge wird die Fläche, die mit durchgeschlagener Farbe bedeckt ist, in eine prozentuale Relation zur Fläche, die von Prüfstreifen bedeckt war, gesetzt. Zusätzlich werden für die Quantität der Farbdurchschläge Schulnoten vergeben.
Es bedeuten
- 1 = keine Farbdurchschläge 0% der Fläche
- 2 = minimale Farbdurchschläge (n ≤ 2) < 1% der Fläche
- 3 = einzelne kleine Farbdurchschläge (n ≤ 10) < 1% der Fläche
- 4 = viele kleine bzw. einzelne große Farbdurchschläge 5-10% der Fläche
- 5 = Flächige Farbdurchschläge > 10% der Fläche

Im Folgenden wird das erfindungsgemäße Klebeband durch die Angabe verschiedener Zusammensetzungen der Klebemasse näher erläutert, ohne die Erfindung damit in irgendeiner Art und Weise einschränken zu wollen.

Erläuterung: in der folgenden Tabelle steht MD für machine direction (in Maschinenrichtung des Papieres) und CD für cross direction (Quer zur Maschinenrichtung des Papieres).

### Beispiele

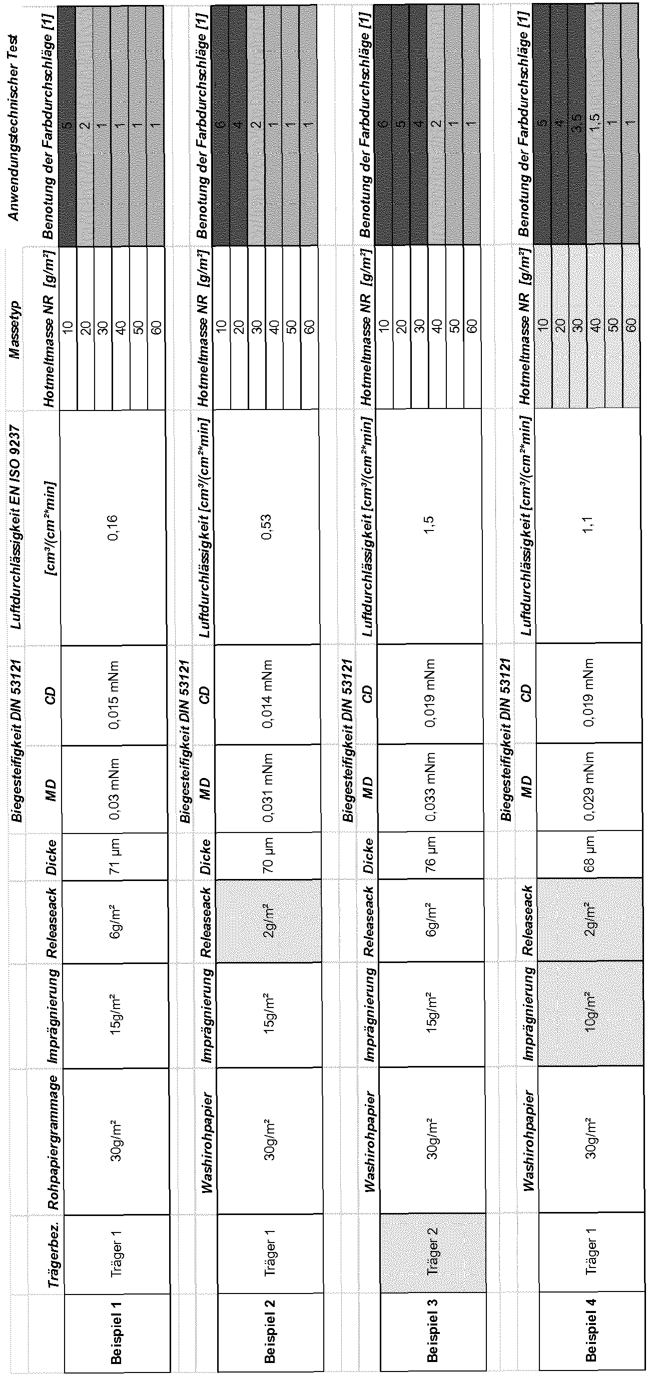

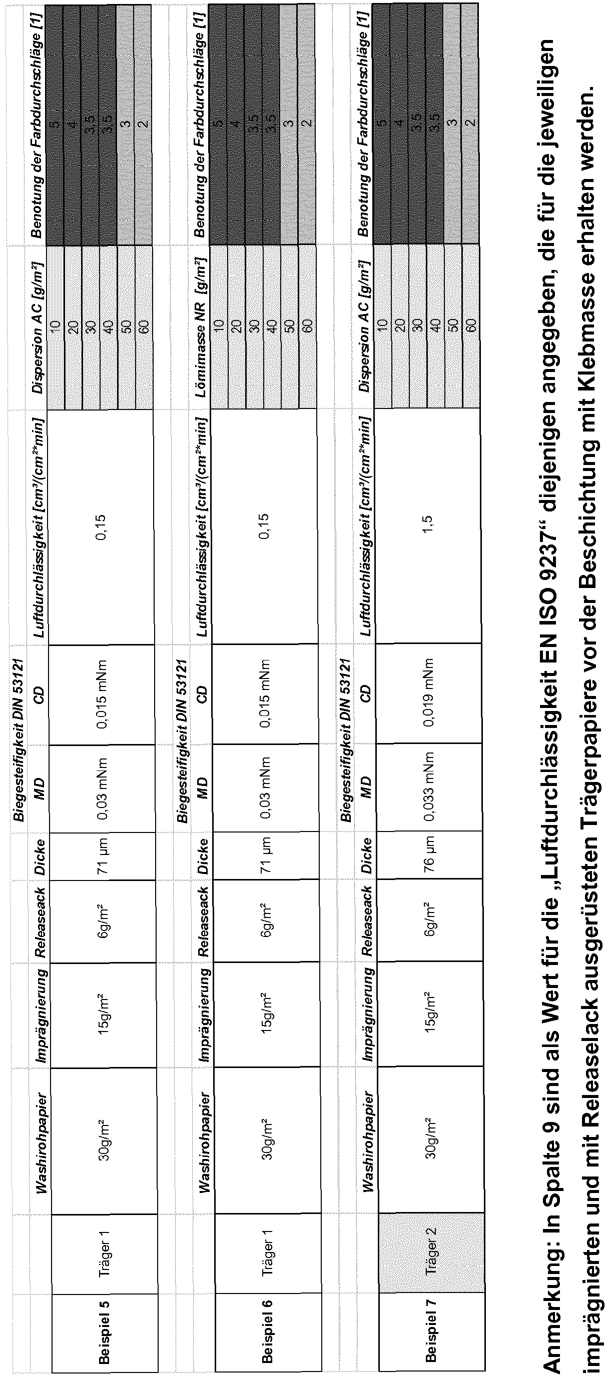

Eine Benotung der Farbdurchschläge von schlechter als 3 gilt als Versagen der jeweiligen Probe. In der letzten Spalte der Tabelle sind diese dunkel unterlegt.

In dem Beispiel 1 ist ein Papierträger gezeigt, der relativ wenige Poren aufweist, so dass bereits ein Klebemassenauftrag von 20 g/m² dazu führt, dass die Poren soweit zugesetzt sind, dass ein akzeptables Ergebnis erzielt wird.

In dem Beispiel 2 ist ein Papierträger gezeigt, bei dem 30 g/m² Klebemasse aufgetragen werden müssen, um ein akzeptables Ergebnis zu erzielen.

In den Beispielen 3 und 4 sind Papierträger gezeigt, bei denen 40 g/m² Klebemasse aufgetragen werden müssen, um ein akzeptables Ergebnis zu erzielen.

Die Beispiele 5 bis 7 zeigen sehr offenporige Papierträger, so dass mit 50 g/m² Klebemasse ein akzeptables Ergebnis erreicht wird.

## Patentansprüche

1. Klebeband, das in dem anwendungstechnischen Test ("Test A") mindestens eine Note von 3 erzielt, mit einem nicht gekreppten, imprägnierten Papierträger, auf dem einseitig eine Klebemasse mit einem Masseauftrag von 20 bis 50 g/m² aufgebracht ist, wobei der nicht gekreppte, imprägnierte Papierträger (vor dem Auftrag der Klebemasse) folgende gleichzeitig Eigenschaften aufweist:
• Imprägniermitteleintrag (trocken) zwischen 5 und 25 g/m²
• Dicke zwischen 50 µm und 90 µm
• Reißdehnung zwischen 3 und 8 %
• Biegesteifigkeit in Maschinenrichtung zwischen 0,015 mNm und 0,035 mNm
• Biegesteifigkeit in Querrichtung zwischen 0,005 mNm und 0,025 mNm
• Luftdurchlässigkeit zwischen 0,06 und 1,5 cm³/(cm^{2*}min)

2. Klebeband nach Anspruch 1, **dadurch gekennzeichnet, dass** die Dicke zwischen 60 µm und 80 µm liegt.

3. Klebeband nach Anspruch 1 und 2, **dadurch gekennzeichnet, dass** die Reißdehnung zwischen 4 und 7 % liegt.

4. Klebeband nach zumindest einem der Ansprüche 1 bis 3,
**dadurch gekennzeichnet, dass**
die Biegesteifigkeit in Maschinenrichtung zwischen 0,02 mNm und 0,03 mNm liegt.

5. Klebeband nach zumindest einem der vorherigen Ansprüche,
**dadurch gekennzeichnet, dass**
die Biegesteifigkeit in Querrichtung zwischen 0,01 mNm und 0,02 mNm liegt.

6. Klebeband nach zumindest einem der vorherigen Ansprüche,
**dadurch gekennzeichnet, dass**
die Luftdurchlässigkeit zwischen 0,06 und 1,0 cm³/(cm^{2*}min) liegt.

7. Klebeband nach zumindest einem der vorherigen Ansprüche,
**dadurch gekennzeichnet, dass**
der Imprägniermitteleintrag (trocken) zwischen 9 und 20 g/m², vorteilhaft zwischen 10 g/m² und 15 g/m² liegt.

8. Klebeband nach zumindest einem der vorherigen Ansprüche,
**dadurch gekennzeichnet, dass**
die Klebemasse eine Haftklebemasse, vorzugseise eine Haftklebemasse auf Basis von Naturkautschuk ist.

9. Klebeband nach zumindest einem der vorherigen Ansprüche,
**dadurch gekennzeichnet, dass**
die Klebemasse eine Haftklebemasse auf Basis von Naturkautschuk ist, die lösemittelfrei mit einem Masseauftrag von 20 bis 50 g/m², vorzugsweise zwischen 20 und 40 g/m² aufgetragen wird.

10. Klebeband nach zumindest einem der vorherigen Ansprüche,
**dadurch gekennzeichnet, dass**
das Papierträgerrohgewicht (ohne Berücksichtigung einer eventuellen Imprägnierung oder Lackierung mit einem Release) bei 20 bis 40 g/m², bevorzugt bei 25 bis 35 g/m² liegt.

11. Klebeband nach zumindest einem der vorherigen Ansprüche,
**dadurch gekennzeichnet, dass**
auf der der Klebemasse gegenüberliegenden Seite des Papierträgers eine Trennmittel-/Releaseschicht mit einem Masseauftrag von 2 g/m² bis 10 g/m², vorzugsweise zwischen 4 und 8 g/m² aufgebracht ist.

12. Klebeband nach zumindest einem der vorherigen Ansprüche,
**dadurch gekennzeichnet, dass**
auf der mit Klebemasse ausgerüsteten Seite des Papierträgers eine Haftvermittler-/Primerschicht mit einem Masseauftrag von 0,5 g/m² bis 6 g/m², vorzugsweise zwischen 2,0 und 4,5 g/m².aufgebracht ist, die zwischen Klebemasse und Papierträger angeordnet ist.

13. Klebeband nach zumindest einem der vorherigen Ansprüche,
**dadurch gekennzeichnet, dass**
das Klebeband nur aus den folgenden Schichten besteht,
• Imprägnierung
• Haftvermittler-/Primerschicht
• Trennmittel-/Releaseschicht
• Haftklebemasse
• und keine weiteren Barriere- oder Funktionsschichten aufgetragen werden.

14. Klebeband nach zumindest einem der vorherigen Ansprüche,
**dadurch gekennzeichnet, dass**
das Klebeband die folgenden Eigenschaften aufweist:
• eine Klebkraft auf Stahl von 1,0 N/cm bis 2,5 N/cm, vorzugsweise bis zu 1,5 N/cm bis 2,0 N/cm und/oder
• einen Rolling Ball Tack von kleiner als 100 mm

15. Verwendung eines Klebebands nach zumindest einem der vorherigen Ansprüche als Abdeckklebeband.

16. Verwendung eines Klebebands nach zumindest einem der vorherigen Ansprüche zur vorübergehenden Maskierung eines Untergrundes während eines Lackiervorgangs.

## Claims

1. Adhesive tape which achieves at least a score of 3 in the performance test ("test A") comprising an uncreped , impregnated paper carrier upon which an adhesive is onesidedly applied with a coatweight of 20 to 50 g/m², wherein the uncreped, impregnated paper carrier (before application of the adhesive) has the following simultaneous properties:
• impregnating agent loading (dry) between 5 and 25 g/m²
• thickness between 50 µm and 90 µm
• breaking elongation between 3% and 8% flexural strength in machine direction between 0.015 mNm and 0.035 mNm
• flexural strength in transverse direction between 0.005 mNm and 0.025 mNm
• air permeability between 0.06 and 1.5 cm³/ (cm^{2*}min)

2. Adhesive tape according to Claim 1, **characterized in that** the thickness is between 60 µm and 80 µm.

3. Adhesive tape according to Claim 1 and 2, **characterized in that** the breaking elongation is between 4% and 7%.

4. Adhesive tape according to at least one of Claims 1 to 3, **characterized in that** the flexural strength in the machine direction is between 0.02 mNm and 0.03 mNm.

5. Adhesive tape according to at least one of the preceding claims, **characterized in that** the flexural strength in the transverse direction is between 0.01 mNm and 0.02 mNm.

6. Adhesive tape according to at least one of the preceding claims, **characterized in that** the air permeability is between 0.06 and 1.0 cm³/(cm^{2*}min).

7. Adhesive tape according to at least one of the preceding claims, **characterized in that** the impregnating agent loading (dry) between 9 and 20 g/m², advantageously between 10 and 15 g/m².

8. Adhesive tape according to at least one of the preceding claims, **characterized in that** the adhesive is a pressure sensitive adhesive, preferably a pressure sensitive adhesive based on natural rubber.

9. Adhesive tape according to at least one of the preceding claims, **characterized in that** the adhesive is a pressure sensitive adhesive based on natural rubber which is solventlessly applied with a coatweight of 20 to 50 g/m², preferably between 20 and 40 g/m².

10. Adhesive tape according to at least one of the preceding claims, **characterized in that** the paper carrier base weight (excluding any impregnation or coating with a release) is 20 to 40 g/m2, preferably 25 to 35 g/m2.

11. Adhesive tape according to at least one of the preceding claims, **characterized in that** a release agent/release layer is applied to the side of the paper carrier opposite the adhesive with a coatweight of 2 g/m² to 10 g/m², preferably between 4 g/m² and 8 g/m².

12. Adhesive tape according to at least one of the preceding claims, **characterized in that** applied with a coatweight of 0.5 to 6 g/m², preferably between 2.0 and 4.5 g/m², on the side of the paper carrier endowed with adhesive is an adhesion promoter/primer layer which is disposed between the adhesive and the paper carrier.

13. Adhesive tape according to at least one of the preceding claims, **characterized in that** the adhesive tape consists solely of the following layers
• impregnation
• adhesion promoter/primer layer
• release agent/release layer
• pressure sensitive adhesive
• and no further barrier or functional layers are applied.

14. Adhesive tape according to at least one of the preceding claims, **characterized in that** the adhesive tape has the following properties:
• an adhesion to steel of 1.0 N/cm to 2.5 N/cm, preferably up to 1.5 N/cm to 2.0 N/cm, and/or
• a rolling ball tack of less than 100 mm.

15. Use of an adhesive tape according to at least one of the preceding claims as an adhesive masking tape.

16. Use of an adhesive tape according to at least one of the preceding claims for temporary masking of a substrate during a painting operation.

## Revendications

1. Bande adhésive, qui obtient au moins une note de 3 dans le test d'application (« test A »), comprenant un support en papier non crêpé imprégné, sur lequel est appliquée, sur un côté, une matière adhésive en un poids d'application de 20 à 50 g/m², le support en papier non crêpé imprégné présentant (avant l'application de la matière adhésive), les propriétés concomitantes suivantes :
- un chargement avec l'agent d'imprégnation (à sec) compris entre 5 et 25 g/m²,
- une épaisseur comprise entre 50 µm et 90 µm,
- un allongement à la rupture compris entre 3 et 8 %,
- une rigidité à la flexion dans le sens machine comprise entre 0,015 mNm et 0,035 mNm,
- une rigidité à la flexion dans le sens transversal comprise entre 0,005 mNm et 0,025 mNm,
- une perméabilité à l'air comprise entre 0,06 et 1,5 cm³/(cm²*min).

2. Bande adhésive selon la revendication 1, **caractérisée en ce que** l'épaisseur est comprise entre 60 µm et 80 µm.

3. Bande adhésive selon les revendications 1 et 2, **caractérisée en ce que** l'allongement à la rupture est compris entre 4 et 7 %.

4. Bande adhésive selon au moins l'une quelconque des revendications 1 à 3, **caractérisée en ce que** la rigidité à la flexion dans le sens machine est comprise entre 0,02 mNm et 0,03 mNm.

5. Bande adhésive selon au moins l'une quelconque des revendications précédentes, **caractérisée en ce que** la rigidité à la flexion dans le sens transversal est comprise entre 0,01 mNm et 0,02 mNm.

6. Bande adhésive selon au moins l'une quelconque des revendications précédentes, **caractérisée en ce que** la perméabilité à l'air est comprise entre 0,06 et 1,0 cm³/(cm²*min).

7. Bande adhésive selon au moins l'une quelconque des revendications précédentes, **caractérisée en ce que** le chargement avec l'agent d'imprégnation (à sec) est compris entre 9 et 20 g/m², avantageusement entre 10 g/m² et 15 g/m².

8. Bande adhésive selon au moins l'une quelconque des revendications précédentes, **caractérisée en ce que** la matière adhésive est une matière adhésive de contact, de préférence une matière adhésive de contact à base de caoutchouc naturel.

9. Bande adhésive selon au moins l'une quelconque des revendications précédentes, **caractérisée en ce que** la matière adhésive est une matière adhésive de contact à base de caoutchouc naturel, qui est appliquée sans solvant en un poids d'application de 20 à 50 g/m², de préférence compris entre 20 et 40 g/m².

10. Bande adhésive selon au moins l'une quelconque des revendications précédentes, **caractérisée en ce que** le poids brut du support en papier (sans prendre en compte une éventuellement imprégnation ou un éventuel vernissage avec un agent anti-adhérent) est de 20 à 40 g/m², de préférence de 25 à 35 g/m².

11. Bande adhésive selon au moins l'une quelconque des revendications précédentes, **caractérisée en ce qu'**une couche d'agent de démoulage/agent anti-adhérent est appliquée sur le côté opposé à la matière adhésive du support en papier en un poids d'application de 2 g/m² à 10 g/m², de préférence compris entre 4 et 8 g/m².

12. Bande adhésive selon au moins l'une quelconque des revendications précédentes, **caractérisée en ce qu'**une couche de promoteur d'adhésion/amorce est appliquée sur le côté muni de la matière adhésive du support en papier en un poids d'application de 0,5 g/m² à 6 g/m², de préférence compris entre 2,0 et 4,5 g/m², qui est agencée entre la matière adhésive et le support en papier.

13. Bande adhésive selon au moins l'une quelconque des revendications précédentes, **caractérisée en ce que** la bande adhésive est constituée uniquement par les couches suivantes :
- une imprégnation,
- une couche de promoteur d'adhésion/amorce,
- une couche d'agent de démoulage/agent anti-adhérent,
- une matière adhésive de contact,
- et aucune couche de barrière ou fonctionnelle supplémentaire n'est appliquée.

14. Bande adhésive selon au moins l'une quelconque des revendications précédentes, **caractérisée en ce que** la bande adhésive présente les propriétés suivantes :
- une force d'adhésion sur l'acier de 1,0 N/cm à 2,5 N/cm, de préférence de jusqu'à 1,5 N/cm à 2,0 N/cm, et/ou
- une adhésivité à une bille roulante inférieure à 100 mm.

15. Utilisation d'une bande adhésive selon au moins l'une quelconque des revendications précédentes en tant que bande adhésive de recouvrement.

16. Utilisation d'une bande adhésive selon au moins l'une quelconque des revendications précédentes pour le masquage temporaire d'un substrat pendant un procédé de vernissage.
